# EUROPÄISCHE PATENTSCHRIFT

(11) **EP 3 268 244 B1**
(45) Veröffentlichungstag und Bekanntmachung des Hinweises auf die Patenterteilung: **13.11.2019**
(21) Anmeldenummer: 16708159.5
(22) Anmeldetag: 07.03.2016
(51) Int. Cl.: B60N 2/015, B60N 2/36, E05B 77/40, E05B 85/24, E05B 85/26

(54) **VERRIEGELUNGSEINHEIT FÜR EINEN FAHRZEUGSITZ UND FAHRZEUGSITZ**
LOCKING UNIT FOR A VEHICLE SEAT, AND VEHICLE SEAT
UNITÉ DE VERROUILLAGE POUR SIÈGE DE VÉHICULE, ET SIÈGE DE VÉHICULE

(30) Priorität: 09.03.2015 DE 102015204190
(43) Veröffentlichungstag der Anmeldung: 17.01.2018
(73) Patentinhaber: Adient Luxembourg Holding S.à r.l., 1855 Luxembourg (LU)
(72) Erfinder: VEDDER, Andreas, 42781 Haan (DE); MOELLER, Uwe, 42697 Solingen (DE); GORDEENKO, Igor, 50226 Frechen (DE); DEMIRCI, Oezkan, 44795 Bochum (DE); HANDL, Patrick, 41540 Dormagen (DE); LABUK, Silke, 67885 Weilerbach (DE); JUNGBLUT, Christina, 66919 Obernheim-Kirchenarnbach (DE); MUELLER, Peter, 67686 Mackenbach (DE); HABER, Stefan, 66955 Pirmasens (DE); WINDECKER, Volker, 67729 Sippersfeld (DE); HAENSEL, Richard, 55237 Flonheim (DE)
(74) Vertreter: Liedhegener, Ralf
(86) Internationale Anmeldenummer: PCT/EP2016/054739
(87) Internationale Veröffentlichungsnummer: WO 2016/142320

(56) Entgegenhaltungen:
- EP-A2- 2 305 929
- WO-A2-2014/125197
- DE-A1-102007 054 765
- JP-A- 2010 285 127

## Beschreibung

Die Erfindung betrifft eine Verriegelungseinheit für einen Fahrzeugsitz mit den Merkmalen des Oberbegriffs des Anspruchs 1. Die Erfindung betrifft auch einen Fahrzeugsitz mit den Merkmalen des Anspruchs 15.

### Stand der Technik

Aus der WO 2010/054860 A2 ist eine gattungsgemäße Verriegelungseinheit für einen Fahrzeugsitz bekannt. Eine derartige Verriegelungseinheit umfasst eine um eine Schwenkachse schwenkbar gelagerte Drehfalle zum Verriegeln mit einem Verriegelungsbolzen. Eine um eine andere Schwenkachse schwenkbar gelagerte Rastklinke sichert die Drehfalle im verriegelten Zustand der Verriegelungseinheit. Ein als Toleranzausgleichsklinke bezeichnetes, schwenkbar gelagertes Spannelement übt auf die Drehfalle ein schließendes Moment aus und eliminiert auf diese Art zwischen der Drehfalle und dem Verriegelungsbolzen vorhandenes Spiel.

Aus der DE 20 2011 100 040 U1 ist ebenfalls eine gattungsgemäße Verriegelungseinheit für einen Fahrzeugsitz bekannt. Die Verriegelungseinheit weist zwei Lagerbolzen auf, welche der schwenkbaren Lagerung der Drehfalle sowie der Rastklinke und des Spannelements dienen. Die beiden Lagerbolzen dienen auch der Befestigung der Verriegelungseinheit an dem Strukturteil des Fahrzeugsitzes und sind annähernd hohlzylindrisch ausgebildet. Zur Befestigung der Verriegelungseinheit an dem Strukturteil des Fahrzeugsitzes sind ferner zwei Schrauben vorgesehen, welche je einen der beiden Lagerbolzen durchgreifen und in das Strukturteil oder eine zusätzliche Mutter eingeschraubt sind.

Bei besagten bekannten Verriegelungseinheiten weist die Drehfalle jeweils vier Konturen auf, welche unterschiedliche Funktionen erfüllen. Eine Haltekontur dient zum Festhalten des Verriegelungsbolzens im verriegelten Zustand. Eine Abstützkontur wirkt mit dem Spannelement zur Spielfreistellung sowie mit der Rastklinke zum Sichern der Drehfalle im verriegelten Zustand zusammen. Eine Offenhaltekontur wirkt mit der Rastklinke zum Sichern der Rastklinke im entriegelten Zustand zusammen. Eine Schließkontur dient beim Entriegeln der Verriegelungseinheit zum Auswerfen des Verriegelungsbolzens. Beim Verriegeln der Verriegelungseinheit gelangt der Verriegelungsbolzen in Anlage an die Schließkontur und schwenkt dadurch die Drehfalle in ihre geschlossene Stellung und die Verriegelungseinheit gelangt in den verriegelten Zustand.

Im verriegelten Zustand der Verriegelungseinheit ist die Drehfalle in der geschlossenen Stellung und die Haltekontur hält den Verriegelungsbolzen fest. Im entriegelten Zustand der Verriegelungseinheit ist die Drehfalle in der geöffneten Stellung.

Derartige Verriegelungseinheiten dienen beispielsweise zur Verriegelung einer Rückenlehne eines Fahrzeugsitzes an einem Sitzteil und/oder an einer Karosserie oder Struktur eines Fahrzeugs oder zur Verriegelung des Fahrzeugsitzes an der Karosserie oder Struktur des Fahrzeugs.

Auch Motorhauben, Heckklappen oder Türen von Fahrzeugen lassen sich mit solchen Verriegelungseinheiten mit der Karosserie oder Struktur des Fahrzeugs verriegeln.

Beispielsweise aus der DE 10 2006 003 022 A1, aus der DE 10 2009 021 297 A1, aus der DE 103 27 448 A1, aus der DE 10 2007 054765 A1, aus der JP 2010 285127 A sowie aus der DE 10 2009 037 037 A1 sind derartige Verriegelungseinheiten, welche auch als Schlösser bezeichnet werden, bekannt.

Weitere gattungsgemäße Verriegelungseinheiten sind beispielsweise aus der DE 10 2007 016 409 A1 sowie der DE 10 2012 021 702 A1 bekannt. Eine mit einer elastischen Kunststoffschicht überzogene Drehfalle, welche zur Bereitstellung einer geringeren Kontaktfläche eine Wölbung im Kontaktbereich aufweist, ist aus der US 4,756,564 bekannt.

Aus der WO 2014/125197 A2 ist eine Verriegelung für ein Kraftfahrzeug bekannt, aufweisend eine Platte und ein Gehäuse, das den gesamten Mechanismus der Verriegelung umschließt. Die Verriegelung aufweisend einen Riegel, der zum Eingriff mit einem an einem festen Rahmen vorstehenden Bolzen vorgesehen ist, sowie eine drehbare Sperrklinke, die dazu bestimmt ist, den Riegel in der geschlossenen Position zu halten. Der Bolzen gleitet auf einer Seitenfläche des Riegels entlang einer sogenannten Schließbahn und drückt auf den Riegel, wenn das Schloss geschlossen ist. Gemäß der WO 2014/125197 A2 ist die Seitenfläche gegenüber der vorderen Oberfläche des Riegels gegenüber der der Platte zugewandten hinteren Oberfläche über mindestens einen ersten Teil des Schließwegs geneigt, wobei der Bolzen mit der Kante der Seitenfläche in Kontakt kommt wenn das Schloss geschlossen ist.

### Aufgabe

Der Erfindung liegt die Aufgabe zu Grunde, eine Verriegelungseinheit der eingangs genannten Art zu verbessern, insbesondere die von einem Verriegelungsbolzen in die Verriegelungseinheit eingeleiteten Kräfte besser aufzunehmen.

### Lösung

Diese Aufgabe wird erfindungsgemäß durch eine Verriegelungseinheit für einen Fahrzeugsitz mit den im Anspruch 1 genannten Merkmalen gelöst. Vorteilhafte Ausgestaltungen, welche einzeln oder in Kombination miteinander eingesetzt werden können, sind Gegenstand der Unteransprüche.

Eine gattungsgemäße Verriegelungseinheit für einen Fahrzeugsitz umfasst eine zwischen einer geöffneten Stellung und einer geschlossene Stellung um eine Schwenkachse schwenkbar gelagerte Sperrklinke mit einer Haltekontur zum Festhalten eines Verriegelungsbolzens in der geschlossenen Stellung.

Im verriegelten Zustand der Verriegelungseinheit ist die Sperrklinke dabei in der geschlossenen Stellung und die Haltekontur hält den Verriegelungsbolzen fest. Im entriegelten Zustand der Verriegelungseinheit ist die Sperrklinke in der geöffneten Stellung.

Ferner ist mindestens eine um dieselbe Schwenkachse schwenkbar gelagerte Klaue vorgesehen, wobei die Klaue eine Schließkontur aufweist, wobei die Sperrklinke durch eine Beaufschlagung der Schließkontur durch den Verriegelungsbolzen von der geöffneten Stellung in die geschlossene Stellung schwenkbar ist.

Erfindungsgemäß weist eine dem Verriegelungsbolzen zugewandte Oberfläche einer Ummantelung der Sperrklinke einen Verlauf auf, welcher in Axialrichtung einen Scheitelpunkt aufweist.

Durch die Bereitstellung des Scheitelpunktes im Verlauf der Haltekontur und/oder der Oberfläche einer Ummantelung wird es ermöglicht, dass die mittels des Verriegelungsbolzens auf die Sperrklinke und/oder die Klaue in der geschlossenen Stellung ausgeübte Kraft besonders vorteilhaft aufgenommen werden kann, so dass keine überhöhten Scherkräfte oder Biegekräfte auftreten. Dies ist besonders vorteilhaft, wenn die üblicherweise parallel zur Axialrichtung orientierte, zu haltende Abschnitt des Verriegelungsbolzens relativ zur Axialrichtung verdreht und/oder verkantet.

Hierbei kann es auch vorgesehen sein, dass die Sperrklinke und die Klaue, zur Bildung einer Drehfalle, einstückig ausgebildet sind, wodurch sich die vorliegende Erfindung ebenfalls auf bekannte Ausführungen mit einer einstückigen Drehfalle anwenden lässt.

Alternativ und/oder zusätzlich kann die Klaue in Axialrichtung versetzt zu der Sperrklinke um dieselbe Schwenkachse schwenkbar gelagert sein.

Durch das getrennte Vorsehen einer Sperrklinke und mindestens einer Klaue, welche axial zueinander versetzt angeordnet sind, anstelle einer Drehfalle, ist die bekannte Integration von Haltekontur, Schließkontur, Abstützkontur und Offenhaltekontur auf einer Drehfalle vorteilhaft aufgelöst.

Die Integrationsauflösung ermöglicht einen kleineren Bauraum, weil durch die beschriebene Mehrteiligkeit eine optimale räumliche Schachtelung der Bauteile erreicht werden kann. Die Mehrteiligkeit ermöglicht die Aufteilung von Bereichen, die hohe Lasten aufnehmen, und von weniger belasteten Bereichen auf getrennte Bauteile. Dadurch können mehr Bereiche aus leichten Materialien ausgeführt werden und das Gesamtgewicht sinkt.

Eine Sperrklinke mit Haltekontur wird also mit mindestens einer Klaue so verbunden, dass durch entsprechende Beaufschlagung einer auf der Klaue befindlichen Schließkontur die Sperrklinke aus einer geöffneten Stellung in eine geschlossene Stellung bewegt werden kann.

Hierdurch wird es möglich, die Form einer Sperrklinke mit Haltekontur so zu gestalten, dass ihr Kontaktpunkt zu einem Verriegelungsbolzen in der näherungsweise gleichen Ebene senkrecht zu ihrer Schwenkachse oder ihrem Momentanpol liegt, wie ein Kontaktpunkt des Verriegelungsbolzens zu einem Anschlagelement.

Vorzugsweise umfasst die Verriegelungseinheit daher ein Anschlagelement, welches derart angeordnet ist, dass bei verriegelter Verriegelungseinheit der Verriegelungsbolzen in einem ersten Kontaktpunkt an dem Anschlagelement und in einem zweiten Kontaktpunkt an der Haltekontur oder der Oberfläche der Ummantelung der Sperrklinke anliegt, wobei der erste Kontaktpunkt und der zweite Kontaktpunkt zumindest annähernd in eine Ebene liegen, welche senkrecht zu der Axialrichtung verläuft.

Dadurch muss sich die Sperrklinke mit Haltekontur nicht oder weniger um ihre Schwenkachse bewegen, um Winkelabweichungen des Verriegelungsbolzens relativ zu ihrer Schwenkachse auszugleichen.

Bevorzugt ist liegt hierbei der zweite Kontaktpunkt im Bereich des Scheitelpunktes.

Die Verriegelungseinheit kann es ferner aufweisen, dass die Haltekontur und/oder die Oberfläche der Ummantelung der Sperrklinke einen im Scheitelpunkt aneinander angrenzenden ersten Abschnitt und einen zweiten Abschnitt aufweist, wobei der zweite Abschnitt größer ist als der erste Abschnitt.

Durch die Vorgabe der Abmessungen und relativen Proportionen des ersten Abschnitts und des zweiten Abschnitts zueinander, lässt sich der seitliche Versatz zur Mitte der Haltekontur und/oder der Oberfläche besonders genau definieren und somit die von dem Verriegelungsbolzen eingeleiteten Kräfte besonders sicher aufnehmen.

Ferner entspricht die Breite des zweiten Abschnitts hierbei einen Vielfachen, insbesondere mindestens dem 4-fachen, der Breite des ersten Abschnitts. Durch eine Bestimmung und Vorgabe des Größenverhältnisses des ersten und zweiten Abschnitts zueinander, kann die erfindungsgemäße Wirkung in gewünschter Weise besonders einfach beeinflusst werden.

Vorzugsweise weist der erste Abschnitt eine Krümmung mit einem Radius im Bereich von 1 mm bis 5 mm, bevorzugt im Bereich von 2,5 mm bis 4 mm, auf. Der zweite Abschnitt weist vorzugsweise eine Krümmung mit einem Radius im Bereich von 30 mm bis 100 mm, bevorzugt im Bereich von 40 mm bis 50 mm, auf. Mittels einer Kombination der beiden Radien des ersten Abschnitt und des zweiten Abschnitt lässt sich der Scheitelpunkt entsprechend seiner seitlichen Ausrichtung ebenfalls mit einfachen Mitteln definieren. Beispielsweise kann der Scheitelpunkt durch einen ersten Abschnitt mit einem sehr geringen Radius einen sehr hohen seitlichen Versatz zur Mitte der Haltekontur und/oder der Oberfläche der Ummantelung aufweisen. Alternativ zu einer Krümmung, kann der erste und/oder zweite Abschnitt ebenso mit einer ebenen Oberfläche angefast sein und eine entsprechende eigene Neigung aufweisen, welche insbesondere von einer Neigung des jeweils anderen Abschnitts unterschiedlich ist.

Ein die Klaue antreibendes Spannelement kann dann bei gleichem Schwenkbereich mit einem über den Kontaktbereich kleineren mittleren Kontaktwinkel zu der Klaue ausgeführt werden.

Bei gleichem Antriebsmoment des Spannelements beginnt sich das Spannelement deshalb erst bei höheren, öffnend auf die Sperrklinke wirkenden, Kräften zu bewegen.

Der gleichzeitige Kontakt des Verriegelungsbolzens zu dem Anschlagelement und zu der Haltekontur der Sperrklinke bleibt so auch bei höheren dynamischen Anregungen des Verriegelungsbolzens bestehen und Geräusche aufgrund von wechselnden Kontaktbedingungen zwischen der Sperrklinke, dem Verriegelungsbolzen und dem Anschlagelement werden vermieden.

Die Anordnung der Schließkontur auf einer zu der Sperrklinke versetzt angeordnetem Klaue ermöglicht es, die Sperrklinke so zu formen, dass sich die Sperrklinke von der geschlossenen in die geöffnete Stellung bewegen kann, ohne mit dem in der gleichen Funktionsebene angeordneten Anschlagelement zu kollidieren.

Vorzugsweise ist das Anschlagelement in Axialrichtung versetzt zu der Klaue angeordnet. Dadurch schwenkt die Klaue während des Verriegelns sowie des Entriegelns der Verriegelungseinheit an dem Anschlagelement vorbei.

Gemäß einer vorteilhaften Ausgestaltung der Erfindung weist die Klaue eine Abstützkontur auf, welche in der geschlossenen Stellung der Sperrklinke mit einer Rastklinke zum Sichern der Sperrklinke und/oder mit einem Spannelement zur Spielfreistellung der Sperrklinke zusammen wirkt.

Die Sperrklinke wird also mit mindestens einer Klaue verbunden, die axial versetzt zu dem Kontaktbereich des Verriegelungsbolzens mit der Sperrklinke angeordnet ist. Auf mindestens einer so angeordneten und mit der Sperrklinke verbundenen Klaue befindet sich die Abstützkontur, die eine Lastaufnahme an dem Kontaktbereich der Sperrklinke zu dem Verriegelungsbolzen auch bei Kräften, die eine Bewegung des Spannelements bewirken können, sicher stellt.

Das Spannelement ist vorzugsweise schwenkbar um eine zu der Schwenkachse der Sperrklinke parallel verlaufende zweite Schwenkachse schwenkbar gelagert. Es ist aber beispielsweise auch denkbar, dass das Spannelement als translatorisch geführter Keil ausgebildet ist.

Gemäß einer weiteren vorteilhaften Ausgestaltung der Erfindung weist die Klaue eine Offenhaltekontur auf, welche mit einer Rastklinke zum Sichern der Rastklinke in der geöffneten Stellung der Sperrklinke zusammen wirkt.

Eine auf einem weiteren Bauteil oder auf der Klaue angeordnete Offenhaltekontur hält die Klaue sowie eine daran anliegende Rastklinke also in der geöffneten Stellung.

Die Offenhaltekontur kann alternativ auch auf einem mit dem Gehäuse beweglich verbunden Anschlagelement in der Funktionsebene der ersten Klinke liegen.

Die Sperrklinke und die Klaue sind vorzugsweise drehfest, und zwar in beide Schwenkrichtungen, miteinander verbunden. Die Verbindung der in versetzten Funktionsebenen angeordneten Bauteile Sperrklinke und Klaue kann formschlüssig, kraftschlüssig oder stoffschlüssig erfolgen. Die Verbindung kann teilweise auch nur in eine Bewegungsrichtung wirken.

Gemäß einer vorteilhaften Weiterbildung der Erfindung umfasst die Verriegelungsvorrichtung zwei parallel zueinander verlaufende Koppelbleche, welche zwei Haltebohrungen, in welche je ein Lagerbolzen eingesetzt ist, und eine Halteöffnung, in welche ein Haltebolzen mit eine Durchgriffsöffnung eingesetzt ist, aufweisen, wobei die Halteöffnung und/oder die Durchgriffsöffnung als Langloch ausgeführt sind. Dadurch ist eine Anpassung der Verriegelungseinheit an verschiedene Stichmasse des Fahrzeugsitzes möglich.

Gemäß einer vorteilhaften Weiterbildung der Erfindung sind die Sperrklinke und die Klaue abschnittsweise von einer gemeinsamen Ummantelung umgeben, welche vorzugsweise aus einem Kunststoff besteht. Wodurch in vorteilhafter Weise, eine Reduzierung der entstehenden Geräusche beim Schließen oder Öffnen der Klinke durch das Kontaktieren des Bolzens erfolgen kann.

Gemäß einer vorteilhaften Weiterbildung der Erfindung weist die Klaue eine Abstützkontur, eine Schließkontur, eine Offenhaltekontur und eine Nase mit einer Haltekontur auf.

Vorzugsweise deckt die Ummantelung wenigstens die Haltekonturen der Nasen der Sperrklinke und der Klaue ab.

Vorzugsweise weist die Ummantelung im Bereich der Haltekonturen eine konvexe Wölbung auf, sodass im verriegelten Zustand der Verriegelungseinheit die Kontaktpunkte des Verriegelungsbolzens mit der Ummantelung der Haltekonturen sowie mit dem Anschlagelement annähernd in einer Ebene, welche senkrecht zu der Axialrichtung verläuft, liegen.

Die Aufgabe wird auch durch einen Fahrzeugsitz mit den im Anspruch 15 genannten Merkmalen gelöst, welcher mindestens eine Verriegelungseinheit nach einem der vorstehenden Ansprüche umfasst.

### Figuren und Ausführungsformen der Erfindung

Im Folgenden ist die Erfindung anhand von in den Zeichnungen dargestellten vorteilhaften Ausführungsbeispielen näher erläutert. Die Erfindung ist jedoch nicht auf diese Ausführungsbeispiele beschränkt. Es zeigen:

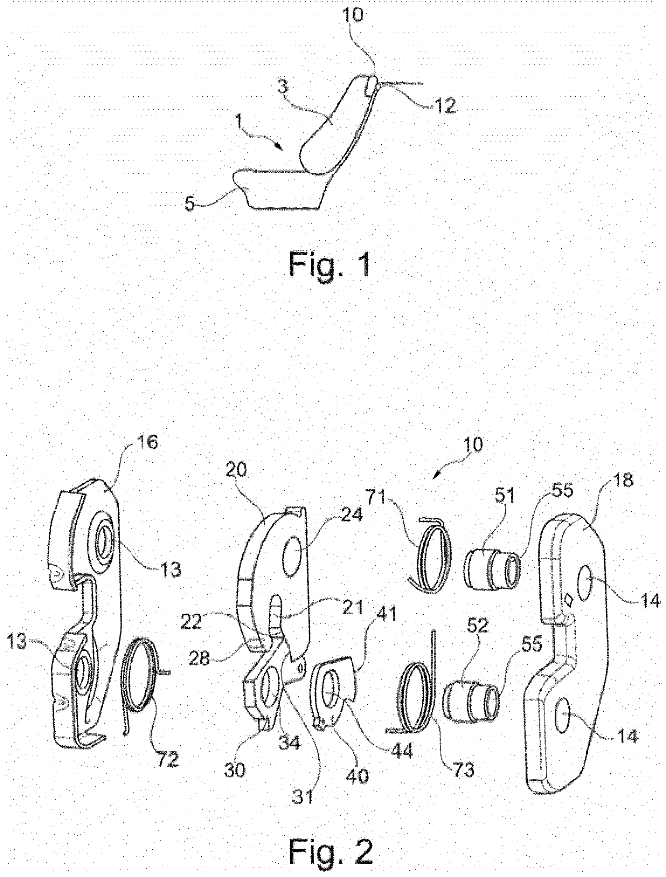

- Fig. 1:: eine schematische Seitenansicht eines Fahrzeugsitzes,
- Fig. 2:: eine Explosionsdarstellung einer gattungsgemäßen Verriegelungseinheit gemäß dem Stand der Technik,

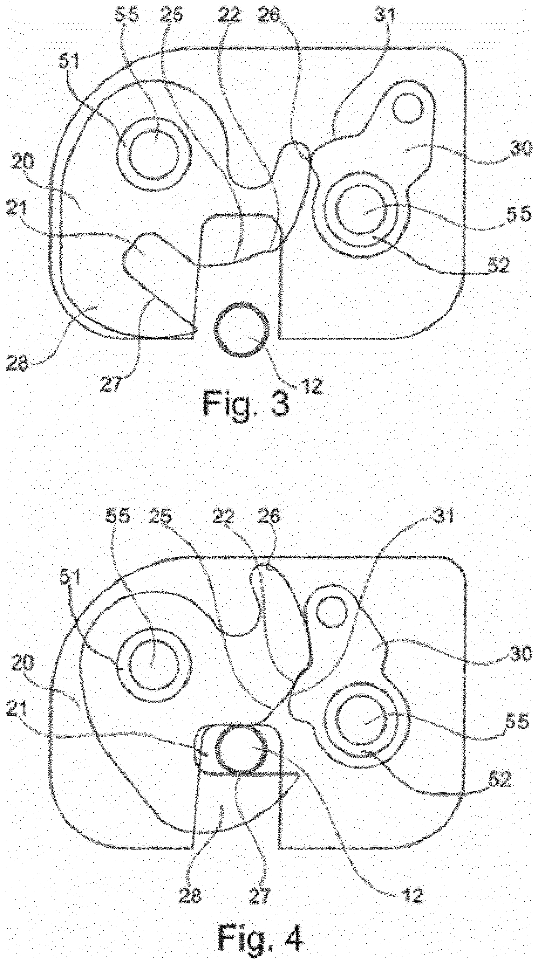

- Fig. 3:: eine schematische Seitenansicht einer weiteren gattungsgemäßen Verriegelungseinheit gemäß dem Stand der Technik im entriegelten Zustand,
- Fig. 4:: eine schematische Seitenansicht der Verriegelungseinheit gemäß Fig. 3 im verriegelten Zustand,
- Fig. 5:: eine schematische Seitenansicht eines ersten Ausführungsbeispiels einer erfindungsgemäßen Verriegelungseinheit im entriegelten Zustand,
- Fig. 6:: eine schematische Seitenansicht eines zweiten Ausführungsbeispiels einer erfindungsgemäßen Verriegelungseinheit im entriegelten Zustand,
- Fig. 7:: eine schematische Seitenansicht eines dritten Ausführungsbeispiels einer erfindungsgemäßen Verriegelungseinheit im entriegelten Zustand,
- Fig. 8:: eine schematische Seitenansicht des dritten Ausführungsbeispiels gemäß Fig. 7 im verriegelten Zustand,
- Fig. 9:: eine perspektivische Darstellung eines vierten Ausführungsbeispiels einer erfindungsgemäßen Verriegelungseinheit im verriegelten Zustand,
- Fig. 10:: eine weitere perspektivische Darstellung des vierten Ausführungsbeispiels gemäß Fig. 9 im verriegelten Zustand,
- Fig. 11:: eine Seitenansicht des vierten Ausführungsbeispiels gemäß Fig. 9 im verriegelten Zustand,
- Fig. 12:: eine Seitenansicht des vierten Ausführungsbeispiels gemäß Fig. 9 im verriegelten Zustand ohne vorderes Koppelblech und ohne Ummantelung,
- Fig. 13:: einen Schnitt entlang der Linie A-A in Fig. 11,
- Fig. 14:: eine Explosionsdarstellung des vierten Ausführungsbeispiels gemäß Fig. 9,
- Fig. 15:: eine perspektivische Darstellung eines fünften Ausführungsbeispiels einer erfindungsgemäßen Verriegelungseinheit im verriegelten Zustand,
- Fig. 16:: eine perspektivische Darstellung eines sechsten Ausführungsbeispiels einer erfindungsgemäßen Verriegelungseinheit im verriegelten Zustand,
- Fig. 17:: eine Seitenansicht des sechsten Ausführungsbeispiels gemäß Fig. 16 im verriegelten Zustand,
- Fig. 18:: einen Schnitt einer Ausführungsform Ausführungsform mit Drehfalle entlang der Linie A-A in Fig. 11.

In einem Kraftfahrzeug ist eine Verriegelungseinheit 10 zur Anbindung einer Rückenlehne 3 eines Fahrzeugsitzes 1, insbesondere eines Rücksitzes, an einer Fahrzeugstruktur vorgesehen. Die Rückenlehne 3 ist dabei von einer Gebrauchsstellung in eine Nichtgebrauchsstellung schwenkbar an einem Sitzteil 5 angebracht.

Die Verriegelungseinheit 10 ist aber auch an anderen Stellen einsetzbar, beispielsweise zur Befestigung des Sitzteils 5 des Fahrzeugsitzes 1 an der Bodenstruktur des Kraftfahrzeugs oder in einem Türschloss.

Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Eine Verriegelungseinheit 10 gemäß dem Stand der Technik weist ein Schlossgehäuse auf, welches eine Seitenplatte 16 und eine Abdeckplatte 18 umfasst. Die Grundflächen der Seitenplatte 16 und der Abdeckplatte 18 sind flach ausgestaltet und in einer durch die Fahrtrichtung und die Vertikalrichtung definierten Ebene angeordnet, also senkrecht zur Querrichtung. Die Seitenplatte 16 umfasst zwei kreisrund ausgeführte erste Lagerbohrungen 13. Die Abdeckplatte 18 umfasst zwei kreisrund ausgeführte zweite Lagerbohrungen 14.

In der Seitenplatte 16 und in der Abdeckplatte 18 ist eine Aufnahmeöffnung ausgebildet, welche sich in Richtung eines Verriegelungsbolzens 12 öffnet, um diesen zum Verriegeln aufzunehmen. Dabei ist die Verriegelungseinheit 10 vorliegend an der Rückenlehne 3 und der Verriegelungsbolzen 12 an der Fahrzeugstruktur befestigt. Es ist auch denkbar, dass die Verriegelungseinheit 10 an der Fahrzeugstruktur und der Verriegelungsbolzen 12 an der Rückenlehne 3 befestigt ist. Der von der Aufnahmeöffnung aufzunehmende Abschnitt des Verriegelungsbolzens 12 verläuft vorliegend horizontal in Querrichtung.

Eine Drehfalle 20 ist auf einem ersten Lagerbolzen 51 schwenkbar gelagert, welcher an der Seitenplatte 16 und an der Abdeckplatte 18 befestigt ist. Die Drehfalle 20 weist dazu ein Drehfallenloch 24 auf, welches von dem ersten Lagerbolzen 51 durchragt wird. Die Drehfalle 20 weist ferner zum Zusammenwirken mit dem Verriegelungsbolzen 12 ein Hakenmaul 21 auf. Mittels einer ersten Feder 71 ist die Drehfalle 20 in Öffnungsrichtung vorgespannt.

Die Drehfalle 20 weist eine Abstützkontur 22 auf, welche das Hakenmaul 21 teilweise seitlich begrenzt. Die Abstützkontur 22 ist annähernd eben ausgebildet, kann aber beispielsweise auch kreisbogenförmig gekrümmt und konkav ausgebildet sein. Im verriegelten Zustand der Verriegelungseinheit 10 weist die Abstützkontur 22 näherungsweise in Richtung eines zweiten Lagerbolzens 52, welcher parallel zu dem ersten Lagerbolzen 51 verläuft.

Auf der dem Drehfallenloch 24 abgewandten Seite des Hakenmauls 21, der Abstützkontur 22 gegenüber liegend, ist das Hakenmaul 21 von einer Nase 28 der Drehfalle 20 seitlich begrenzt. Die Nase 28 weist eine Haltekontur 27 auf, welche im verriegelten Zustand der Verriegelungseinheit 10 an dem Verriegelungsbolzen 12 anliegt.

Der erste Lagerbolzen 51 ist in eine erste Lagerbohrung 13 der Seitenplatte 16 und in eine zweite Lagerbohrung 14 der Abdeckplatte 18 eingesetzt und steht von den Grundflächen der Seitenplatte 16 und der Abdeckplatte 18 senkrecht ab. Der erste Lagerbolzen 51 verläuft somit vorliegend in Querrichtung. Der erste Lagerbolzen 51 weist eine Durchgangsöffnung 55 mit einem annähernd konstanten Innendurchmesser auf.

Auch der zweite Lagerbolzen 52 ist in je eine erste Lagerbohrung 13 der Seitenplatte 16 und in je eine zweite Lagerbohrung 14 der Abdeckplatte 18 eingesetzt und steht von den Grundflächen der Seitenplatte 16 und der Abdeckplatte 18 senkrecht ab. Der zweite Lagerbolzen 52 verläuft somit ebenfalls vorliegend in Querrichtung. Der zweite Lagerbolzen 52 weist, ebenso wie der erste Lagerbolzen 51, eine Durchgangsöffnung 55 mit einem annähernd konstanten Innendurchmesser auf.

Die Durchgangsöffnungen 55 der Lagerbolzen 51, 52 dienen dazu, ein Befestigungsmittel, beispielsweise eine Schraube, aufzunehmen, mittels dessen die Verriegelungseinheit 10 bei der Montage an der Rückenlehne 3 oder an einem anderen Strukturteil des Fahrzeugsitzes 1 oder des Fahrzeugs befestigt wird. Dazu werden die Schrauben in Befestigungsbohrungen in dem Strukturteil eingeschraubt.

Auf dem zweiten Lagerbolzen 52 ist schwenkbar ein Spannelement 40 gelagert. Dazu weist das Spannelement 40 ein vorliegend kreisrundes Spannelementloch 44 auf, welches von dem zweiten Lagerbolzen 52 durchdrungen ist. Mittels einer dritten Feder 73 ist das Spannelement 40 zu der Drehfalle 20 hin vorgespannt.

Im verriegelten Zustand der Verriegelungseinheit 10, wenn das Hakenmaul 21 der Drehfalle 20 den Verriegelungsbolzen 12 aufnimmt, übt das Spannelement 40 aufgrund der Vorspannung durch die dritte Feder 73 als Sicherungselement ein schließendes Moment auf die Drehfalle 20 aus. Dazu weist das Spannelement 40 eine exzentrisch zu dem zweiten Lagerbolzen 52 gekrümmte Spannfläche 41 auf, welche sich in nicht-selbsthemmendem Kontakt mit der Abstützkontur 22 der Drehfalle 20 befindet. Die Spannfläche 41 ist vorliegend kreisbogenförmig gekrümmt und konvex ausgebildet.

Eine Rastklinke 30 ist auf dem zweiten Lagerbolzen 52 axial neben dem Spannelement 40 angeordnet und ebenfalls schwenkbar auf dem zweiten Lagerbolzen 52 gelagert, also mit dem Spannelement 40 fluchtend. Dazu weist die Rastklinke 30 ein vorliegend kreisrundes Rastklinkenloch 34 auf, welches von dem zweiten Lagerbolzen 52 durchdrungen ist. Mittels einer zweiten Feder 72 ist die Rastklinke 30 zu der Drehfalle 20 hin vorgespannt.

Die Rastklinke 30 weist eine Rastfläche 31 auf, welche sich in Nachbarschaft zu der Spannfläche 41 des Spannelements 40 befindet. Im verriegelten Zustand der Verriegelungseinheit 10 ist die Rastfläche 31 beabstandet zu der Abstützkontur 22 der Drehfalle 20 positioniert. Die Rastfläche 31 ist vorliegend kreisbogenförmig gekrümmt und konvex ausgebildet, kann aber auch eben sein.

Die Rastklinke 30 ist vorliegend der Seitenplatte 16 benachbart angeordnet und das Spannelement 40 ist vorliegend der Abdeckplatte 18 benachbart angeordnet. Die Rastklinke 30 und das Spannelement 40 sind mit einem Leerweg auf Mitnahme gekoppelt, beispielsweise mittels einer Schlitz-Zapfen-Führung oder mittels eines axial abstehenden Mitnehmers.

Die Richtung, in welche die Lagerbolzen 51, 52 verlaufen, wird im Folgenden als Axialrichtung bezeichnet. Vorliegend, bei der beschriebenen Einbausituation der Verriegelungseinheit 10 an der Rückenlehne 3 des Fahrzeugsitzes 1, verläuft die Axialrichtung parallel zu der Querrichtung.

Im verriegelten Zustand der Verriegelungseinheit 10 befindet sich der Verriegelungsbolzen 12 in der in der Seitenplatte 16 und der Abdeckplatte 18 gebildeten Aufnahmeöffnung und im Hakenmaul 21 der geschlossenen Drehfalle 20. Die Haltekontur 27 der Nase 28 liegt an dem Verriegelungsbolzen 12 an. Das Spannelement 40 sichert durch Zusammenwirken der Spannfläche 41 mit der Abstützkontur 22 die Drehfalle 20. Die Rastfläche 31 der Rastklinke 30 ist geringfügig von der Abstützkontur 22 der Drehfalle 20 beabstandet.

Zum Öffnen der Verriegelungseinheit 10 wird die Rastklinke 30 von der Drehfalle 20 weg geschwenkt, wodurch sich die Rastfläche 31 der Rastklinke 30 weiter von der Abstützkontur 22 der Drehfalle 20 entfernt. Die Rastklinke 30 nimmt das Spannelement 40 aufgrund der Mitnahmekopplung mit, so dass die Drehfalle 20 nicht länger gesichert ist.

Durch die Vorspannung aufgrund der ersten Feder 71 öffnet die Drehfalle 20, schwenkt also in Öffnungsrichtung. Alternativ oder zusätzlich zu der Vorspannung durch die erste Feder 71 kann die Drehfalle 20 zum Öffnen auch von der Rastklinke 30 oder von dem Spannelement 40 mitgenommen werden.

Aufgrund der Schwenkbewegung der Drehfalle 20 zieht sich das Hakenmaul 21 von der von der Seitenplatte 16 und der Abdeckplatte 18 gebildeten Aufnahmeöffnung zurück und gibt den Verriegelungsbolzen 12 frei. Der Verriegelungsbolzen 12 gleitet dabei entlang einer an der Drehfalle 20 vorgesehenen Schließkontur 25 und entfernt sich entgegen der Einschwenkrichtung von der Verriegelungseinheit 10.

Hat der Verriegelungsbolzen 12 das Hakenmaul 21 verlassen, so befindet sich die Verriegelungseinheit 10 im entriegelten Zustand. Eine an der Drehfalle 20 vorgesehene Offenhaltekontur 26 blockiert dabei die Rastklinke 30 in ihrer Position.

Gelangt in diesem entriegelten Zustand der Verriegelungseinheit 10 der Verriegelungsbolzen 12 wieder in die von der Seitenplatte 16 und der Abdeckplatte 18 gebildete Aufnahmeöffnung und in Anlage an die Schließkontur 25 an dem Rand des Hakenmauls 21, so drückt der Verriegelungsbolzen 12 die Drehfalle 20 in ihre geschlossene Stellung. Das Spannelement 40 bewegt sich aufgrund seiner Vorspannung durch die dritte Feder 73 entlang der Abstützkontur 22. Von dem Spannelement 40 mitgenommen oder aufgrund der Vorspannung durch die zweite Feder 72 schwenkt die Rastklinke 30, die nun nicht mehr von der Offenhaltekontur 26 blockiert ist, auf die Drehfalle 20 zu, wobei sich die Rastfläche 31 der Abstützkontur 22 der Drehfalle 20 nähert. Danach befindet sich die Verriegelungseinheit 10 wieder im verriegelten Zustand.

Die Drehfalle 20 der Verriegelungseinheit 10 gemäß dem Stand der Technik weist somit eine Abstützkontur 22, eine Schließkontur 25, eine Offenhaltekontur 26 und eine Haltekontur 27 auf.

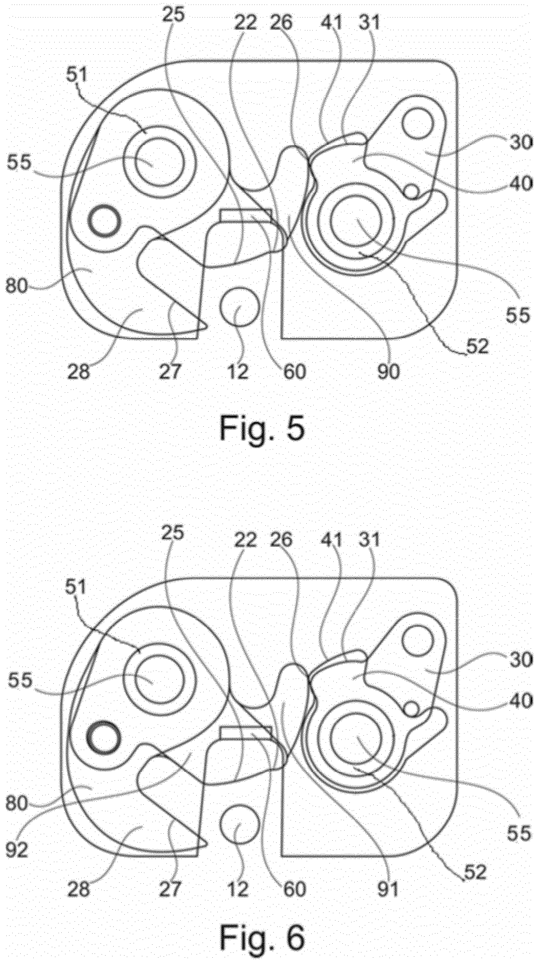

In Fig. 5 ist ein erstes Ausführungsbeispiel einer erfindungsgemäßen Verriegelungseinheit 10 im entriegelten Zustand schematisch dargestellt. Im Folgenden wird im Wesentlichen auf die Unterschiede zwischen dem ersten Ausführungsbeispiel und der aus dem Stand der Technik bekannten Verriegelungseinheit eingegangen.

Anstelle einer Drehfalle weist die Verriegelungseinheit 10 gemäß dem ersten Ausführungsbeispiel eine Sperrklinke 80 und eine Klaue 90 auf, welche in axialer Richtung versetzt parallel auf dem ersten Lagerbolzen 51 schwenkbar gelagert sind. Die Sperrklinke 80 und die Klaue 90 sind vorliegend drehfest miteinander verbunden. Die Klaue 90 liegt dabei der Rastklinke 30 und dem Spannelement 40 gegenüber.

Die Sperrklinke 80 und die Klaue 90 sind also in separaten Funktionsebenen angeordnet. Eine Funktionsebene erstreckt sich dabei senkrecht zur Axialrichtung und weist, im Gegensatz zu einer mathematischen Ebene, eine Ausdehnung in Axialrichtung auf. Die Rastklinke 30 und das Spannelement 40 befinden sich in der Funktionsebene der Klaue 90.

Die Sperrklinke 80 weist eine Nase 28 mit einer Haltekontur 27 auf. Im verriegelten Zustand der Verriegelungseinheit 10 liegt die Haltekontur 27 an dem Verriegelungsbolzen 12 an.

Die Klaue 90 weist eine Abstützkontur 22, eine Schließkontur 25 und eine Offenhaltekontur 26 auf. Im verriegelten Zustand der Verriegelungseinheit 10 liegt die Abstützkontur 22 an der Spannfläche 41 des Spannelements 40 an und die Rastfläche 31 der Rastklinke 30 ist geringfügig von der Abstützkontur 22 der Klaue 90 beabstandet.

Im entriegelten Zustand der Verriegelungseinheit 10 liegt die Offenhaltekontur 26 der Klaue 90 an der Rastklinke 30 an. Während des Verriegelns sowie des Entriegelns der Verriegelungseinheit 10 befindet sich die Schließkontur 25 der Klaue 90 in Kontakt mit dem Verriegelungsbolzen 12.

Vorliegend an der Abdeckplatte 18 ist ein Anschlagelement 60 angebracht, an welchem der Verriegelungsbolzen 12 im verriegelten Zustand der Verriegelungseinheit 10 anliegt. Im verriegelten Zustand der Verriegelungseinheit 10 ist der Verriegelungsbolzen 12 also zwischen der Haltekontur 27 der Sperrklinke 80 und dem Anschlagelement 60 eingespannt.

Das Anschlagelement 60 ist dabei in der Funktionsebene der Sperrklinke 80 angeordnet. Im verriegelten Zustand der Verriegelungseinheit 10 liegen die Kontaktpunkte des Verriegelungsbolzens 12 mit der Haltekontur 27 der Sperrklinke 80 sowie mit dem Anschlagelement 60 annähernd in einer Ebene, welche senkrecht zu der Axialrichtung verläuft.

Während des Verriegelns sowie des Entriegelns der Verriegelungseinheit 10 schwenkt die Klaue 90 an dem Anschlagelement 60 vorbei.

In Fig. 6 ist ein zweites Ausführungsbeispiel einer erfindungsgemäßen Verriegelungseinheit 10 im entriegelten Zustand schematisch dargestellt. Im Folgenden wird im Wesentlichen auf die Unterschiede zwischen dem zweiten Ausführungsbeispiel und der aus dem Stand der Technik bekannten Verriegelungseinheit eingegangen.

Anstelle einer Drehfalle weist die Verriegelungseinheit 10 gemäß dem zweiten Ausführungsbeispiel eine Sperrklinke 80, eine Spannklaue 92 und eine Rastklaue 91 auf, welche in axialer Richtung versetzt parallel auf dem ersten Lagerbolzen 51 schwenkbar gelagert sind. Die Sperrklinke 80, die Spannklaue 92 und die Rastklaue 91 sind vorliegend drehfest miteinander verbunden. Die Rastklaue 91 liegt dabei der Rastklinke 30 gegenüber und die Spannklaue 92 liegt dem Spannelement 40 gegenüber.

Die Sperrklinke 80, die Rastklaue 91 und die Spannklaue 92 sind also in separaten Funktionsebenen angeordnet. Eine Funktionsebene erstreckt sich dabei senkrecht zur Axialrichtung und weist, im Gegensatz zu einer mathematischen Ebene, eine Ausdehnung in Axialrichtung auf. Die Rastklinke 30 befindet sich in der Funktionsebene der Rastklaue 91. Das Spannelement 40 befindet sich in der Funktionsebene der Spannklaue 92.

Die Sperrklinke 80 weist eine Nase 28 mit einer Haltekontur 27 auf. Im verriegelten Zustand der Verriegelungseinheit 10 liegt die Haltekontur 27 an dem Verriegelungsbolzen 12 an.

Die Rastklaue 91 weist eine erste Abstützkontur 22, eine erste Schließkontur 25 und eine Offenhaltekontur 26 auf. Im verriegelten Zustand der Verriegelungseinheit 10 ist die Rastfläche 31 der Rastklinke 30 geringfügig von der ersten Abstützkontur 22 der Rastklaue 91 beabstandet.

Im entriegelten Zustand der Verriegelungseinheit 10 liegt die Offenhaltekontur 26 der Rastklaue 91 an der Rastklinke 30 an. Während des Verriegelns sowie des Entriegelns der Verriegelungseinheit 10 befindet sich die erste Schließkontur 25 der Rastklaue 91 in Kontakt mit dem Verriegelungsbolzen 12.

Die Spannklaue 92 weist eine zweite Abstützkontur 22 und eine zweite Schließkontur 25 auf. Im verriegelten Zustand der Verriegelungseinheit 10 liegt die zweite Abstützkontur 22 der Spannklaue 92 an der Spannfläche 41 des Spannelements 40 an.

Während des Verriegelns sowie des Entriegelns der Verriegelungseinheit 10 befindet sich die zweite Schließkontur 25 der Spannklaue 92 in Kontakt mit dem Verriegelungsbolzen 12.

Vorliegend an der Abdeckplatte 18 ist ein Anschlagelement 60 angebracht, an welchem der Verriegelungsbolzen 12 im verriegelten Zustand der Verriegelungseinheit 10 anliegt. Im verriegelten Zustand der Verriegelungseinheit 10 ist der Verriegelungsbolzen 12 also zwischen der Haltekontur 27 der Sperrklinke 80 und dem Anschlagelement 60 eingespannt.

Das Anschlagelement 60 ist dabei in der Funktionsebene der Sperrklinke 80 angeordnet. Im verriegelten Zustand der Verriegelungseinheit 10 liegen die Kontaktpunkte des Verriegelungsbolzens 12 mit der Haltekontur 27 der Sperrklinke 80 sowie mit dem Anschlagelement 60 annähernd in einer Ebene, welche senkrecht zu der Axialrichtung verläuft.

Während des Verriegelns sowie des Entriegelns der Verriegelungseinheit 10 schwenken die Spannklaue 92 und die Rastklaue 91 an dem Anschlagelement 60 vorbei.

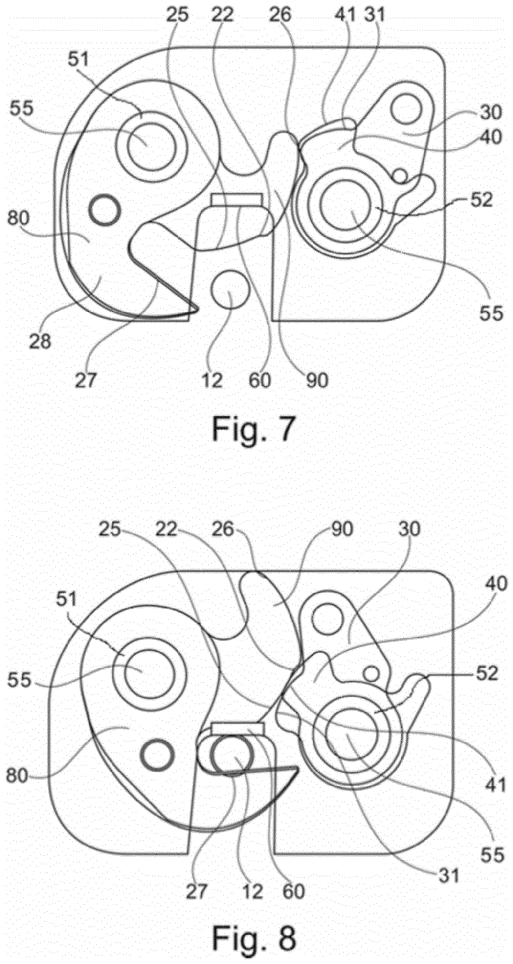

In Fig. 7 bis Fig. 8 ist ein drittes Ausführungsbeispiel einer erfindungsgemäßen Verriegelungseinheit 10 dargestellt. Im Folgenden wird im Wesentlichen auf die Unterschiede zwischen dem dritten Ausführungsbeispiel und der aus dem Stand der Technik bekannten Verriegelungseinheit eingegangen.

Anstelle einer Drehfalle weist die Verriegelungseinheit 10 gemäß dem dritten Ausführungsbeispiel eine Sperrklinke 80 und eine Klaue 90 auf, welche in axialer Richtung versetzt parallel auf dem ersten Lagerbolzen 51 schwenkbar gelagert sind. Die Sperrklinke 80 und die Klaue 90 sind vorliegend drehfest miteinander verbunden. Die Klaue 90 liegt dabei der Rastklinke 30 und dem Spannelement 40 gegenüber.

Die Sperrklinke 80 und die Klaue 90 sind also in separaten Funktionsebenen angeordnet. Eine Funktionsebene erstreckt sich dabei senkrecht zur Axialrichtung und weist, im Gegensatz zu einer mathematischen Ebene, eine Ausdehnung in Axialrichtung auf. Die Rastklinke 30 und das Spannelement 40 befinden sich in der Funktionsebene der Klaue 90.

Die Sperrklinke 80 weist eine erste Nase 28 mit einer ersten Haltekontur 27 auf. Im verriegelten Zustand der Verriegelungseinheit 10 liegt die erste Haltekontur 27 der Sperrklinke 80 an dem Verriegelungsbolzen 12 an.

Die Klaue 90 weist eine Abstützkontur 22, eine Schließkontur 25, eine Offenhaltekontur 26 und eine zweite Nase 28 mit einer zweiten Haltekontur 27 auf.

Im verriegelten Zustand der Verriegelungseinheit 10 liegt die Abstützkontur 22 der Klaue 90 an der Spannfläche 41 des Spannelements 40 an und die Rastfläche 31 der Rastklinke 30 ist geringfügig von der Abstützkontur 22 der Klaue 90 beabstandet.

Im verriegelten Zustand der Verriegelungseinheit 10 liegt ferner die zweite Haltekontur 27 der Klaue 90 an dem Verriegelungsbolzen 12 an.

Im entriegelten Zustand der Verriegelungseinheit 10 liegt die Offenhaltekontur 26 der Klaue 90 an der Rastklinke 30 an. Während des Verriegelns sowie des Entriegelns der Verriegelungseinheit 10 befindet sich die Schließkontur 25 der Klaue 90 in Kontakt mit dem Verriegelungsbolzen 12.

Vorliegend an der Abdeckplatte 18 ist ein Anschlagelement 60 angebracht, an welchem der Verriegelungsbolzen 12 im verriegelten Zustand der Verriegelungseinheit 10 anliegt. Im verriegelten Zustand der Verriegelungseinheit 10 ist der Verriegelungsbolzen 12 also zwischen der ersten Haltekontur 27 der Sperrklinke 80 und dem Anschlagelement 60 eingespannt.

Das Anschlagelement 60 ist dabei in der Funktionsebene der Sperrklinke 80 angeordnet. Im verriegelten Zustand der Verriegelungseinheit 10 liegen die Kontaktpunkte des Verriegelungsbolzens 12 mit der ersten Haltekontur 27 der Sperrklinke 80 sowie mit dem Anschlagelement 60 annähernd in einer Ebene, welche senkrecht zu der Axialrichtung verläuft.

Während des Verriegelns sowie des Entriegelns der Verriegelungseinheit 10 schwenkt die Klaue 90 an dem Anschlagelement 60 vorbei.

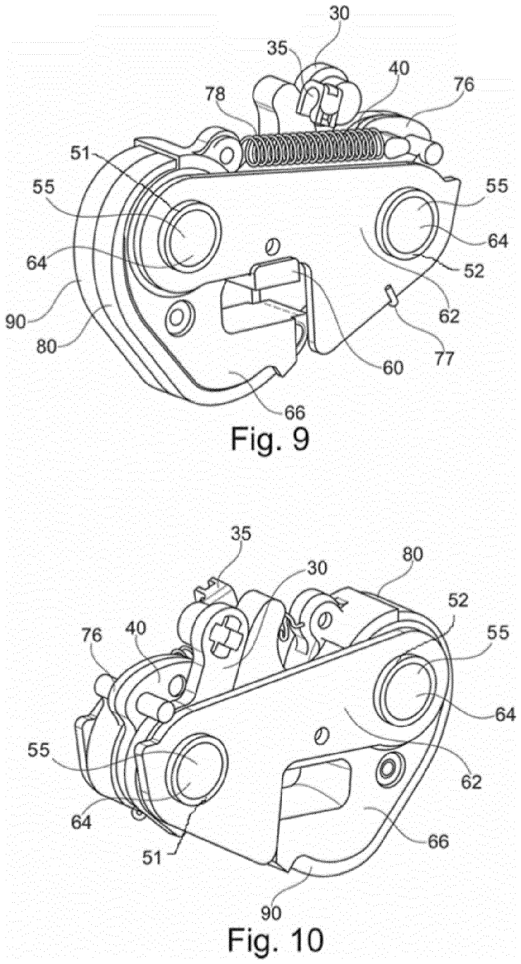

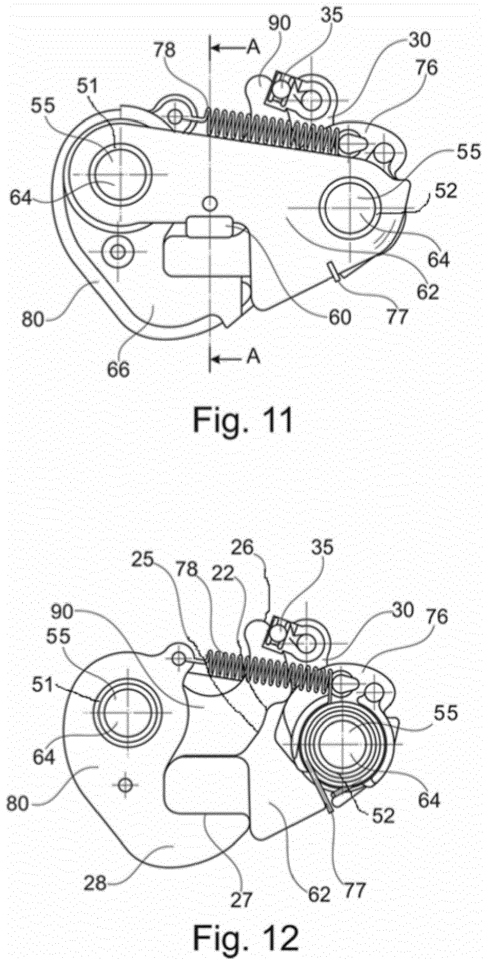

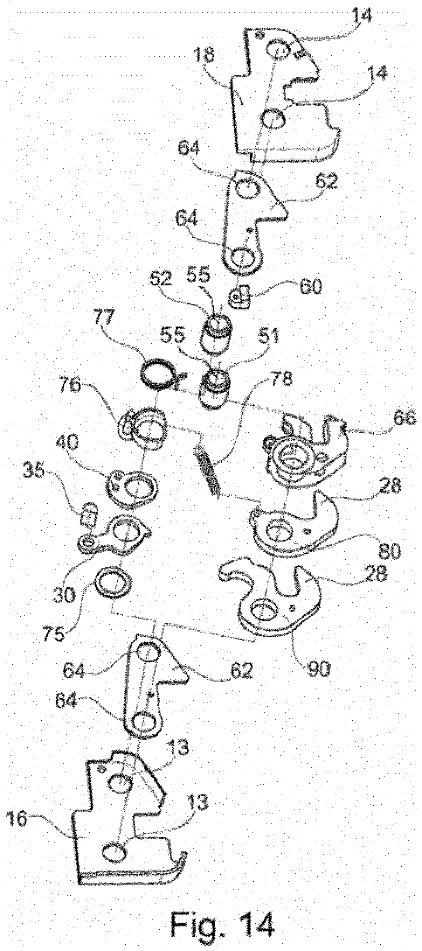

In Fig. 9 bis Fig. 14 ist ein viertes Ausführungsbeispiel einer erfindungsgemäßen Verriegelungseinheit 10 dargestellt. Das vierte Ausführungsbeispiel gleicht dabei weitgehend dem dritten Ausführungsbeispiel. Im Folgenden wird daher im Wesentlichen auf die Unterschiede zwischen dem vierten Ausführungsbeispiel und dem dritten Ausführungsbeispiel eingegangen.

Die Verriegelungseinheit 10 gemäß dem vierten Ausführungsbeispiel umfasst zwei Koppelbleche 62, welche vorliegend aus Metall bestehen und flach ausgebildet sind. Die beiden Koppelbleche 62 verlaufen parallel zueinander und weisen je zwei Haltebohrungen 64 zur Aufnahme von zwei Lagerbolzen 51, 52 auf.

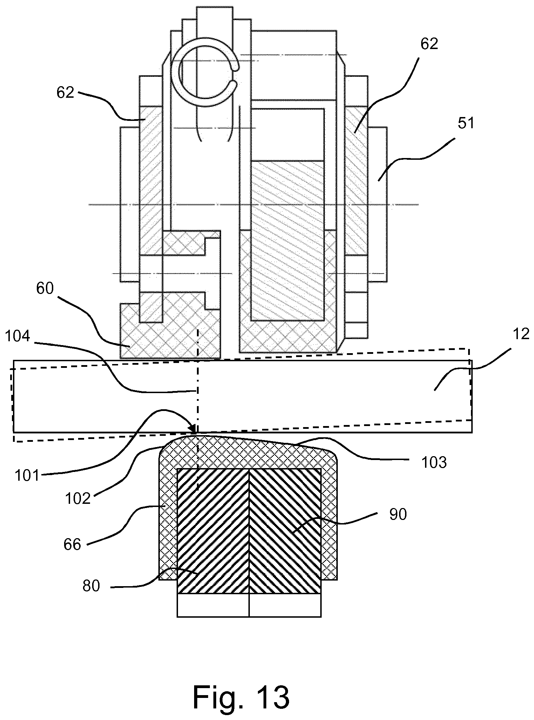

Eine Sperrklinke 80 und eine Klaue 90 sind von einer gemeinsamen Ummantelung 66 umgeben, welche vorliegend aus Kunststoff besteht. Die Ummantelung 66 bedeckt unter anderem die Haltekonturen 27 der Nasen 28 der Sperrklinke 80 und der Klaue 90. In dem Bereich, in welchen die Ummantelung 66 die Haltekonturen 27 bedeckt, ist die Ummantelung 66 leicht konvex gewölbt ausgebildet. Die Wölbung der Oberfläche 100 der Ummantelung 66 bildet hierbei wie dargestellt einen Scheitelpunkt 101, welcher in Axialrichtung versetzt zur Mitte der Breite der Oberfläche 100 angeordnet ist. Der Fig. 13 ist hierbei ebenso zu entnehmen, dass sich ein erster Abschnitt 102 und einer zweiter Abschnitt 103, je links und rechts des Scheitelpunktes 101 erstrecken. Der erste Abschnitt weist hierbei eine Krümmung mit einem vergleichsweise geringen Radius auf, während der zweite Abschnitt einen verglichen zum Radius des ersten Abschnittes großen Radius aufweist. Das Verhältnis des ersten Abschnitts und des zweiten Abschnitts zueinander lässt sich beispielsweise anhand der jeweiligen Radien, Breiten, Neigungen und/oder Winkel bestimmen und angeben. Diese Verhältnisse können beispielsweise im Bereich von 1:1,1 bis 1:50 je nach vorgenannter Maßangabe variieren.

Die Ummantelung 66 ist derart gewölbt, dass im verriegelten Zustand der Verriegelungseinheit 10 die Kontaktpunkte des Verriegelungsbolzens 12 mit der Ummantelung 66 der Haltekonturen 27 sowie mit dem Anschlagelement 60 annähernd in einer Kontaktebene 104, welche senkrecht zu der Axialrichtung verläuft, liegen. Auch bei einer leichten Neigung des Verriegelungsbolzens 12 zur Axialrichtung, welche in Fig. 13 durch eine unterbrochene Umrandung angedeutet ist, verschiebt sich der Kontaktpunkt des Verriegelungsbolzens 12 mit der Ummantelung 66 der Haltekonturen 27 nur unwesentlich in Axialrichtung. Der Kontaktpunkt bewegt sich hierbei insbesondere entlang der Oberfläche 100 der Ummantelung 66 der Haltekontur 27, in einem Bereich des Scheitelpunkts 101.

Der erste Lagerbolzen 51, auf welchem die Sperrklinke 80 und die Klaue 90 schwenkbar angeordnet sind, ist beidseitig in je eine Haltebohrung 64 eines Koppelblechs 62 eingesetzt und dort befestigt.

Auf dem zweiten Lagerbolzen 52 sind eine Distanzscheibe 75, eine Rastklinke 30, ein Spannelement 40 und ein Mitnehmer 76 nebeneinander schwenkbar gelagert. Auch der zweite Lagerbolzen 52 ist beidseitig in je eine Haltebohrung 64 eines Koppelblechs 62 eingesetzt und dort befestigt.

Mittels einer Schenkelfeder 77 ist die Rastklinke 30 zu der Drehfalle 20 hin vorgespannt. Die Schenkelfeder 77 ist um den zweite Lagerbolzen 52 herum gewunden und stützt sich mit jeweils einem Federende an einem der Koppelbleche 62 und an der Rastklinke 30 ab.

Das Spannelement 40 ist drehfest mit dem Mitnehmer 76 verbunden. Eine Zugfeder 78 ist an der Sperrklinke 80 und an dem Mitnehmer 76 befestigt. Mittels der Zugfeder 78 ist die Sperrklinke 80 in Öffnungsrichtung und das Spannelement 40 zu der Drehfalle 20 hin vorgespannt.

An der Rastklinke 30 ist eine Rasthülse 35 vorgesehen, vorliegend eingeclipst, welche vorliegend aus Kunststoff besteht, und welche zur Befestigung einer hier nicht dargestellten Betätigungsstange dient.

Das Anschlagelement 60 ist an dem der Sperrklinke 80 benachbarten Koppelblech 62 befestigt. Optional bilden eine Seitenplatte 16 und eine Abdeckplatte 18 ein Schlossgehäuse für die Verriegelungseinheit 10.

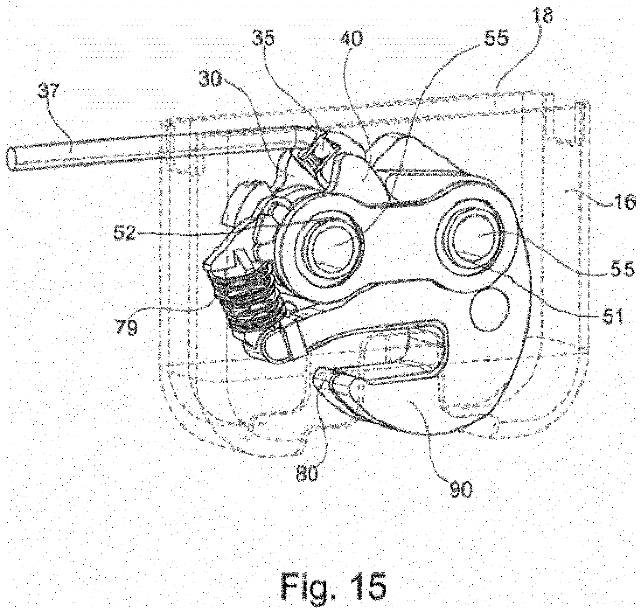

In Fig. 15 ist ein fünftes Ausführungsbeispiel einer erfindungsgemäßen Verriegelungseinheit 10 dargestellt. Das fünfte Ausführungsbeispiel gleicht dabei weitgehend dem vierten Ausführungsbeispiel.

Anstelle einer Zugfeder ist eine Druckfeder 79 vorgesehen, welche zwischen der Klaue 90 und an dem Spannelement 40 befestigt ist. Mittels der Druckfeder 79 ist die Sperrklinke 80 in Öffnungsrichtung und das Spannelement 40 zu der Drehfalle 20 hin vorgespannt.

An der an der Rastklinke 30 vorgesehenen Rasthülse 35 ist eine Betätigungsstange 37 befestigt.

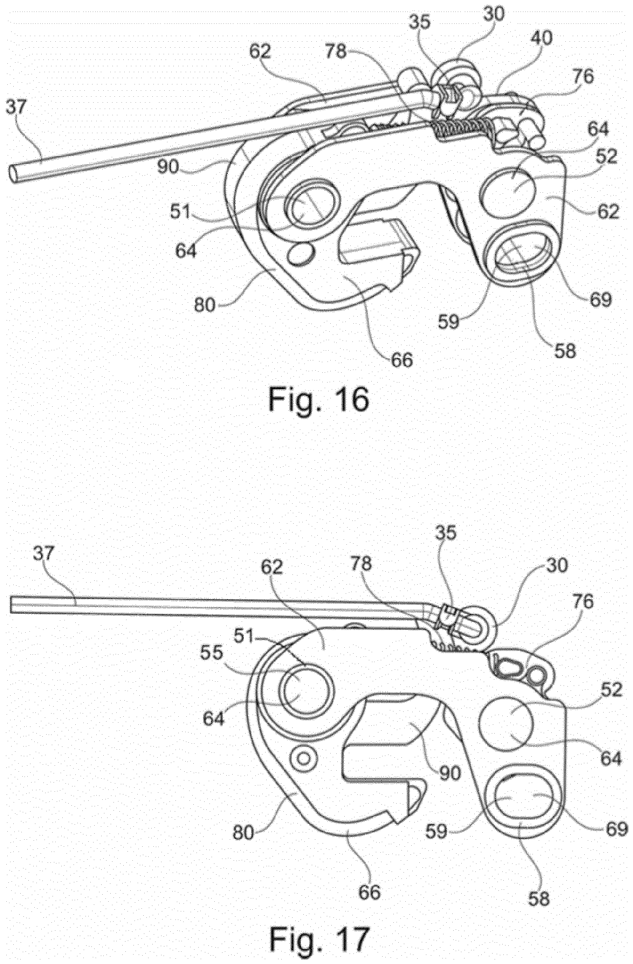

In Fig. 16 und Fig. 17 ist ein sechstes Ausführungsbeispiel einer erfindungsgemäßen Verriegelungseinheit 10 dargestellt. Das sechste Ausführungsbeispiel gleicht dabei weitgehend dem vierten Ausführungsbeispiel.

In den beiden Koppelblechen 62 ist neben den beiden Haltebohrungen 64 je eine Halteöffnung 69 vorgesehen. Die Halteöffnungen 69 sind jeweils als Langloch ausgeführt. In die beiden Halteöffnung 69 ist ein Haltebolzen 58 eingesetzt. Der Haltebolzen 58 ist hohlzylindrisch ausgeführt und weist eine Durchgriffsöffnung 59 auf.

Der Haltebolzen 58 weist vorliegend einen Querschnitt auf, welcher von der Kreisform abweicht und an die Langlochform der Halteöffnungen 69 angepasst ist. Auch die Durchgriffsöffnung 59 weist einen von der Kreisform abweichenden, länglichen Querschnitt auf.

Vorliegend ist der zweite Lagerbolzen 52 massiv ausgeführt, weist also keine Durchgangsöffnung auf.

Zur Befestigung der Verriegelungseinheit 10 sind zwei Schrauben vorgesehen, welche in die Durchgangsöffnung 55 des ersten Lagerbolzens 51 sowie in die Durchgriffsöffnung 59 des Haltebolzens 58 eingesetzt sind. Die Schrauben werden in Befestigungsbohrungen in dem Strukturteil eingeschraubt.

Aufgrund des langlochförmigen Querschnitts der Durchgriffsöffnung 59 des Haltebolzens 58 ist der Abstand der beiden Schrauben zueinander variabel. Dadurch ist eine Anpassung der Verriegelungseinheit 10 an verschiedene Stichmasse des Strukturteils möglich.

Als Stichmaß wird dabei der Abstand der Mittelachsen der Befestigungsbohrungen zueinander bezeichnet.

Alternativ ist der Haltebolzen 58 ähnlich wie der erste Lagerbolzen 51 ausgeführt und weist einen kreisrunden Querschnitt sowie eine Durchgriffsöffnung 59 mit kreisrundem Querschnitt auf. Zur Anpassung der Verriegelungseinheit 10 an verschiedene Stichmasse kann der Haltebolzen 58 innerhalb der langlochförmigen Halteöffnungen 69 verschoben werden. Dadurch ist der Abstand der beiden Schrauben, welche in die Durchgangsöffnung 55 des ersten Lagerbolzens 51 sowie in die Durchgriffsöffnung 59 des Haltebolzens 58 eingesetzt sind, ebenfalls variabel.

An der an der Rastklinke 30 vorgesehenen Rasthülse 35 ist eine Betätigungsstange 37 befestigt.

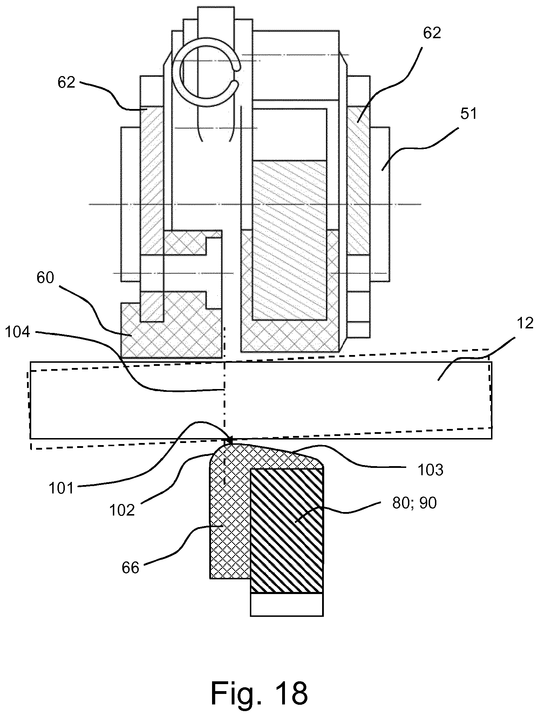

Die in Fig. 18 dargestellte Ausführungsform weist eine Klaue 90 und Sperrklinke 80 in Form einer einstückig ausgebildeten Drehfalle auf. Die Haltekontur 27 der Klaue 90 ist hierbei von einer Ummantelung 66 abschnittsweise umgeben, welche vorliegend aus Kunststoff besteht. Die Ummantelung 66 bedeckt im Wesentlichen die Haltekontur 27 der Nase 28 der Drehfalle, insbesondere der Klaue 90. In dem Bereich, in welchen die Ummantelung 66 die Haltekonturen 27 bedeckt, ist die Ummantelung 66 leicht konvex gewölbt ausgebildet. Die Wölbung der Oberfläche 100 der Ummantelung 66 bildet hierbei wie dargestellt einen Scheitelpunkt, welcher in Axialrichtung versetzt zur Mitte der Breite der Oberfläche (100) gebildet ist. Um den Scheitelpunkt 101 bei der dargestellten Ausführungsform in Axialrichtung über den Bereich der Klaue 90 hinaus zu versetzten, weist die Ummantelung 66 in einem nicht bezifferten seitlichen Abschnitt eine erhöhte Breite auf. Der anhand des Scheitelpunktes 101 abgegrenzte erste Abschnitt 102 und zweite Abschnitt 103 können ebenso wie zu Fig. 13 beschrieben ausgestaltet sein.

Die Ummantelung 66 ist derart gewölbt, dass im verriegelten Zustand der Verriegelungseinheit 10 die Kontaktpunkte des Verriegelungsbolzens 12 mit der Ummantelung 66 der Haltekonturen 27 sowie mit dem Anschlagelement 60 annähernd in einer Kontaktebene 104, welche senkrecht zu der Axialrichtung verläuft, liegen. Auch bei einer leichten Neigung des Verriegelungsbolzens 12 zur Axialrichtung, welche in Fig. 18 durch eine unterbrochene Umrandung angedeutet ist, verschiebt sich der Kontaktpunkt des Verriegelungsbolzens 12 mit der Ummantelung 66 der Haltekonturen 27 nur unwesentlich in Axialrichtung. Der Kontaktpunkt bewegt sich hierbei insbesondere entlang der Oberfläche 100 der Ummantelung 66 der Haltekontur 27, in einem Bereich des Scheitelpunkts 101.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein, solange der resultierende Gegenstand zum Schutzumfang gehört, der durch die Ansprüche definiert ist.

### Bezugszeichenliste

- 1: Fahrzeugsitz
- 3: Rückenlehne
- 5: Sitzteil
- 10: Verriegelungseinheit
- 12: Verriegelungsbolzen
- 13: erste Lagerbohrung
- 14: zweite Lagerbohrung
- 16: Seitenplatte
- 18: Abdeckplatte
- 20: Drehfalle
- 21: Hakenmaul
- 22: Abstützkontur
- 24: Drehfallenloch
- 25: Schließkontur
- 26: Offenhaltekontur
- 27: Haltekontur
- 28: Nase
- 30: Rastklinke
- 31: Rastfläche
- 34: Rastklinkenloch
- 35: Rasthülse
- 37: Betätigungsstange
- 40: Spannelement
- 41: Spannfläche
- 44: Spannelementloch
- 51: erster Lagerbolzen
- 52: zweiter Lagerbolzen
- 55: Durchgangsöffnung
- 58: Haltebolzen
- 59: Durchgriffsöffnung
- 60: Anschlagelement
- 62: Koppelblech
- 64: Haltebohrung
- 66: Ummantelung
- 69: Halteöffnung
- 71: erste Feder
- 72: zweite Feder
- 73: dritte Feder
- 75: Distanzscheibe
- 76: Mitnehmer
- 77: Schenkelfeder
- 78: Zugfeder
- 79: Druckfeder
- 80: Sperrklinke
- 90: Klaue
- 91: Rastklaue
- 92: Spannklaue
- 100: Oberfläche
- 101: Scheitelpunkt
- 102: erster Abschnitt
- 103: zweiter Abschnitt
- 104: Kontaktebene

## Patentansprüche

1. Verriegelungseinheit (10) für einen Fahrzeugsitz (1), umfassend eine zwischen einer geöffneten Stellung und einer geschlossene Stellung um eine Schwenkachse schwenkbar gelagerte Sperrklinke (80) mit einer Haltekontur (27) zum Festhalten eines Verriegelungsbolzens (12) in der geschlossenen Stellung, sowie mindestens eine um dieselbe Schwenkachse schwenkbar gelagerte Klaue (90, 91, 92), wobei die Klaue (90, 91, 92) eine Schließkontur (25) aufweist, wobei die Sperrklinke (80) durch eine Beaufschlagung der Schließkontur (25) durch den Verriegelungsbolzen (12) von der geöffneten Stellung in die geschlossene Stellung schwenkbar ist,
wobei die Sperrklinke (80) und die Klaue (90) in axialer Richtung versetzt parallel auf einem ersten Lagerbolzen (51) schwenkbar gelagert sind,
wobei der erste Lagerbolzen (51) in einer Axialrichtung verläuft,
**dadurch gekennzeichnet,**
**dass** eine dem Verriegelungsbolzen (12) zugewandte Oberfläche (100) einer Ummantelung der Sperrklinke (80) einen Verlauf aufweist, welcher in Axialrichtung versetzt zur Mitte der Breite der Oberfläche (100) in Axialrichtung einen Scheitelpunkt (101) aufweist.

2. Verriegelungseinheit (10) nach Anspruch 1, **dadurch gekennzeichnet, dass** die Sperrklinke (80) und mindestens eine Klaue (90, 91, 92) einstückig ausgebildet sind.

3. Verriegelungseinheit (10) nach Anspruch 1 oder 2, **dadurch gekennzeichnet, dass** die Ummantelung (66) die Sperrklinge (80) und die Klaue (90) bedeckt.

4. Verriegelungseinheit (10) nach einem der Ansprüche 1 bis 3, **dadurch gekennzeichnet, dass** mindestens eine Klaue (90, 91, 92) in Axialrichtung versetzt zu der Sperrklinke (80) um dieselbe Schwenkachse schwenkbar gelagert ist.

5. Verriegelungseinheit (10) nach einem der Ansprüche 1 bis 4, **dadurch gekennzeichnet, dass** ein Anschlagelement (60) derart angeordnet ist, dass bei verriegelter Verriegelungseinheit (10) der Verriegelungsbolzen (12) in einem ersten Kontaktpunkt an dem Anschlagelement (60) und in einem zweiten Kontaktpunkt an der Haltekontur (27) oder der Oberfläche (100) der Ummantelung der Sperrklinke (80) anliegt, wobei der erste Kontaktpunkt und der zweite Kontaktpunkt zumindest annähernd in einer Ebene liegen, welche senkrecht zu der Axialrichtung verläuft.

6. Verriegelungseinheit (10) nach Anspruch 5, **dadurch gekennzeichnet, dass** der zweite Kontaktpunkt im Bereich des Scheitelpunktes (101) liegt.

7. Verriegelungseinheit (10) nach einem der Ansprüche 1 bis 6, **dadurch gekennzeichnet, dass** die Haltekontur (27) und/oder die Oberfläche (100) der Ummantelung der Sperrklinke (80) einen im Scheitelpunkt (101) aneinander angrenzenden ersten Abschnitt (102) und einen zweiten Abschnitt (103) aufweist, wobei der zweite Abschnitt (103) größer ist als der erste Abschnitt (102).

8. Verriegelungseinheit (10) nach Anspruch 7, **dadurch gekennzeichnet, dass** die Breite des zweiten Abschnitts (103) einem Vielfachen der Breite des ersten Abschnitts (102) entspricht.

9. Verriegelungseinheit (10) nach Anspruch 8, **dadurch gekennzeichnet, dass** die Breite des zweiten Abschnitts (103) mindestens dem 4-fachen der Breite des ersten Abschnitts (102) entspricht.

10. Verriegelungseinheit (10) nach einem der Ansprüche 7 bis 9, **dadurch gekennzeichnet, dass** der erste Abschnitt (102) eine Krümmung mit einem Radius im Bereich vom 1 mm bis 5 mm aufweist.

11. Verriegelungseinheit (10) nach Anspruch 10, **dadurch gekennzeichnet, dass** der erste Abschnitt (102) eine Krümmung mit einem Radius im Bereich von 2,5 mm bis 4 mm aufweist.

12. Verriegelungseinheit (10) nach einem der Ansprüche 7 bis 11, **dadurch gekennzeichnet, dass** der zweite Abschnitt (103) eine Krümmung mit einem Radius im Bereich von 30 mm bis 100 mm aufweist.

13. Verriegelungseinheit (10) nach Anspruch 12, **dadurch gekennzeichnet, dass** der zweite Abschnitt (103) eine Krümmung mit einem Radius im Bereich von 40 mm bis 50 mm aufweist.

14. Verriegelungseinheit (10) nach einem der Ansprüche 7 bis 13, **dadurch gekennzeichnet, dass** der erste oder zweite Abschnitt mit einer ebenen Oberfläche angefast ist.

15. Fahrzeugsitz (1), umfassend mindestens eine Verriegelungseinheit (10) nach einem der vorstehenden Ansprüche.

## Claims

1. Locking unit (10) for a vehicle seat (1), comprising a locking pawl (80) which is mounted so as to be pivotable about a pivot axis between an open position and a closed position and which has a retention contour (27) for securing a locking bolt (12) in the closed position, as well as at least one claw (90, 91, 92) which is mounted so as to be pivotable about the same pivot axis, wherein the claw (90, 91, 92) has a closure contour (25), wherein the locking pawl (80) can be pivoted from the open position to the closed position by the closure contour (25) being acted upon by the locking bolt (12),
wherein the locking pawl (80) and the claw (90) are pivotably mounted offset in the axial direction parallel to a first bearing bolt (51), wherein the first bearing bolt (51) extends in an axial direction,
**characterized in that**
a surface (100) of a covering of the locking pawl (80) facing the locking bolt (12) has a path which in the axial direction has an apex (101) which is offset relative to the center of the width of the surface (100) in the axial direction.

2. Locking unit (10) according to Claim 1, **characterized in that** the locking pawl (80) and at least one claw (90, 91, 92) are configured in one piece.

3. Locking unit (10) according to Claim 1 or 2, **characterized in that** the covering (66) covers the locking pawl (80) and the claw (90).

4. Locking unit (10) according to one of Claims 1 to 3, **characterized in that** at least one claw (90, 91, 92) which is offset relative to the locking pawl (80) in the axial direction is pivotably mounted about the same pivot axis.

5. Locking unit (10) according to one of Claims 1 to 4, **characterized in that** a stop element (60) is arranged such that, when the locking unit (10) is locked, the locking bolt (12) bears in a first point of contact against the stop element (60) and in a second point of contact against the retention contour (27) or the surface (100) of the covering of the locking pawl (80), wherein the first point of contact and the second point of contact are located at least approximately in one plane which extends perpendicular to the axial direction.

6. Locking unit (10) according to Claim 5, **characterized in that** the second point of contact is located in the region of the apex (101).

7. Locking unit (10) according to one of Claims 1 to 6, **characterized in that** the retention contour (27) and/or the surface (100) of the covering of the locking pawl (80) has a first portion (102) and a second portion (103) adjacent to one another in the apex (101), wherein the second portion (103) is larger than the first portion (102).

8. Locking unit (10) according to Claim 7, **characterized in that** the width of the second portion (103) corresponds to a multiple of the width of the first portion (102).

9. Locking unit (10) according to Claim 8, **characterized in that** the width of the second portion (103) corresponds at least to 4 times the width of the first portion (102).

10. Locking unit (10) according to one of Claims 7 to 9, **characterized in that** the first portion (102) has a curvature with a radius ranging from 1 mm to 5 mm.

11. Locking unit (10) according to Claim 10, **characterized in that** the first portion (102) has a curvature with a radius ranging from 2.5 mm to 4 mm.

12. Locking unit (10) according to one of Claims 7 to 11, **characterized in that** the second portion (103) has a curvature with a radius ranging from 30 mm to 100 mm.

13. Locking unit (10) according to Claim 12, **characterized in that** the second portion (103) has a curvature with a radius ranging from 40 mm to 50 mm.

14. Locking unit (10) according to one of Claims 7 to 13, **characterized in that** the first or second portion is chamfered with a planar surface.

15. Vehicle seat (1) comprising at least one locking unit (10) according to one of the preceding claims.

## Revendications

1. Unité de verrouillage (10) pour un siège de véhicule (1), comprenant un cliquet (80) disposé de manière pivotante autour d'un axe de pivot entre une position ouverte et une position fermée, doté d'un profil de maintien (27) pour maintenir un boulon de verrouillage (12) dans la position fermée, ainsi qu'au moins une mâchoire (90, 91, 92) disposée de manière pivotante autour du même axe de pivot, dans laquelle la mâchoire (90, 91, 92) comporte un profil de fermeture (25), dans laquelle le cliquet (80) peut pivoter de la position ouverte à la position fermée par le biais d'une sollicitation du profil de fermeture (25) par le boulon de verrouillage (12), dans laquelle le cliquet (80) et la mâchoire (90) sont disposés de manière pivotante sur un premier boulon porteur (51), de manière parallèle et décalée dans la direction axiale, dans laquelle le premier boulon porteur (51) s'étend dans une direction axiale, **caractérisée en ce qu'**une surface (100) d'une gaine du cliquet (80) faisant face au boulon de verrouillage (12) comporte un parcours, lequel possède dans la direction axiale un point culminant (101) décalé dans la direction axiale par rapport au milieu de la largeur de la surface (100).

2. Unité de verrouillage (10) selon la revendication 1, **caractérisée en ce que** le cliquet (80) et au moins une mâchoire (90, 91, 92) sont réalisés d'une pièce.

3. Unité de verrouillage (10) selon la revendication 1 ou 2, **caractérisée en ce que** la gaine (66) couvre le cliquet (80) et la mâchoire (90).

4. Unité de verrouillage (10) selon l'une des revendications 1 à 3, **caractérisée en ce qu'**au moins une mâchoire (90, 91, 92) est disposée de manière pivotante autour du même axe de pivot, de manière décalée par rapport au cliquet (80) dans la direction axiale.

5. Unité de verrouillage (10) selon l'une des revendications 1 à 4, **caractérisée en ce qu'**un élément de butée (60) est agencé de telle sorte que, lorsque l'unité de verrouillage (10) est verrouillée, le boulon de verrouillage (12) est contigu à l'élément de butée (60) à un premier point de contact et contigu au profil de maintien (27) ou à la surface (100) de la gaine du cliquet (80) à un deuxième point de contact, dans laquelle le premier point de contact et le deuxième point de contact se trouvent au moins approximativement dans un plan qui s'étend perpendiculairement à la direction axiale.

6. Unité de verrouillage (10) selon la revendication 5, **caractérisée en ce que** le deuxième point de contact se trouve dans la zone du point culminant (101).

7. Unité de verrouillage (10) selon l'une des revendications 1 à 6, **caractérisée en ce que** le profil de maintien (27) et/ou la surface (100) de la gaine du cliquet (80) comporte une première section (102) et une deuxième section (103) adjacentes l'une à l'autre au point culminant (101), dans laquelle la deuxième section (103) est plus grande que la première section (102),

8. Unité de verrouillage (10) selon la revendication 7, **caractérisée en ce que** la largeur de la deuxième section (103) correspond à un multiple de la largeur de la première section (102).

9. Unité de verrouillage (10) selon la revendication 8, **caractérisée en ce que** la largeur de la deuxième section (103) correspond à au moins le quadruple de la largeur de la première section (102).

10. Unité de verrouillage (10) selon l'une des revendications 7 à 9, **caractérisée en ce que** la première section (102) comporte une courbure avec un rayon dans un intervalle de 1 mm à 5 mm.

11. Unité de verrouillage (10) selon la revendication 10, **caractérisée en ce que** la première section (102) comporte une courbure avec un rayon dans un intervalle de 2,5 mm à 4 mm.

12. Unité de verrouillage (10) selon l'une des revendications 7 à 11, **caractérisée en ce que** la deuxième section (103) comporte une courbure avec un rayon dans un intervalle de 30 mm à 100 mm.

13. Unité de verrouillage (10) selon la revendication 12, **caractérisée en ce que** la deuxième section (103) comporte une courbure avec un rayon dans un intervalle de 40 mm à 50 mm.

14. Unité de verrouillage (10) selon l'une des revendications 7 à 13, **caractérisée en ce que** la première ou la deuxième section est chanfreinée avec une surface plane.

15. Siège de véhicule (1), comprenant au moins une unité de verrouillage (10) selon l'une des revendications précédentes.
